# EUROPEAN PATENT APPLICATION

(11) **EP 1 310 404 A1**
(43) Date of publication of application: **14.05.2003**
(21) Application number: 02079702.3
(22) Date of filing: 08.11.2002
(51) Int. Cl.: B60P 3/00, B60P 7/15

(54) **Device for transporting and storing bulk goods such as clothing**

(30) Priority: 08.11.2001 NL 1019327; 14.01.2002 NL 1019737
(71) Applicant: Deville Corporation N.V., Curacao (AN)
(72) Inventor: de Ridder, Paul, 4748 AA Standdaarbuiten (NL)
(74) Representative: Hoorweg, Petrus Nicolaas

(57) **Abstract**

Assembly for transporting and storing bulk goods, such as clothing, comprising an elongate loading space (1) supported by a chassis (2), which chassis (2) has at least one set of wheels (9) and a coupling point arranged at a distance therefrom for a tractor, wherein the loading space (1) is formed as a self-supporting elongate unit of specified dimensions, and with a flat loading floor suitable for optimal loading of the bulk goods, with lockable access doors (4) arranged in the side wall and having CO₂ measuring means placed inside the loading space, which unit is placeable and fixable on the chassis (2), with means (12) suitable for container transport.

## Description

The invention relates to an assembly for transporting and storing bulk goods, such as clothing, comprising an elongate loading space supported by a chassis, which chassis has at least one set of wheels and a coupling point arranged at a distance therefrom for a tractor.

For bulk transport of the type stated in the preamble use is usually made of trucks which are provided with a driven chassis or a drawn chassis on which the walls, roof and floor parts are made by a bodywork constructor to obtain the closed loading space.

It has been found in practice that such a loading space defined by a bodywork is not optimal in respect of volume and not sufficiently secure against thieves on the one hand and against stowaways on the other. Both can easily gain access via the roof or the side wall without opening the locked doors. This is due to the relatively light materials from which the bodywork is constructed. Another drawback in bodywork construction for the loading space is that damage can occur easily as a result of collisions and the like, which damage is difficult to repair, which repair is therefore expensive. The invention has for its object to obviate the above stated drawbacks by providing an assembly which is distinguished in that the loading space is formed as a self-supporting elongate unit according to a predetermined dimensioning, with lockable access doors arranged in the side wall, which unit is placeable and fixable on the height-adjusted chassis.

Since the loading space is a separate component of the chassis construction, the loading space can be constructed from its own particular materials, for instance by means of corrugated steel plates as proposed by the invention, whereby a great rigidity and strength of the loading space is achieved. Since all walls, roof and floor parts are constructed from the same material and are welded together along the full length, a box-shaped loading space is created which is exceptionally strong and which is not easily opened by unauthorized persons. If damage occurs, it will moreover be possible to repair it relatively easily by means of replacing the damaged parts with replacement steel plate which is obtainable quite cheaply on the market.

The loading unit according to the invention can moreover be provided with one or more CO₂-measuring points, with which it is possible to detect whether stowaways are present in the loading space, even when the cargo has already been arranged in the space. Such a cargo will of course obstruct the view from the access doors, so that stowaways are difficult to find. This is however possible in simple manner with the CO₂-measuring points.

Owing to the purpose-built structure of the loading unit it is also simple to obtain a large internal dimension with relatively small outside dimensions, for instance with a length of 13573 mm, a width of 2462 mm and a constant height of 2818 mm, whereby it becomes possible, within the permissible dimensions for road transport, to provide a loading space of as much as 94.2 m³, wherein in the case of clothing transport 27 head bars can be used placed in three rows above one another, or wherein two 120 cm wide pallets or three 80 cm wide Euro-pallets can be placed adjacently of each other. This is also possible due to the flat loading floor extending over the full length and width of the loading unit, whereby the same height of the loading unit is obtained at both the front and rear, so that loading can take place efficiently from the outset. In the trailers with normal bodywork there is an elevation in the floor of the front part of the loading space due to the 'Kingpin system'.

According to the invention it is recommended to also embody the loading space with a standard pattern of twistlocks, whereby despite the non-regular dimensions the loading unit can be handled as a container, whereby it can be readily uncoupled from the chassis, for instance during replacement of the chassis or the loading unit while repairing damage, wherein it also becomes possible, if desired, to use the loading unit in ship or rail transport.

Finally, the invention proposes to provide the inside of the longitudinal sides of the loading unit with matrix panels for easy suspension of cross-bars serving for hanging clothing transport.

The invention will be further elucidated hereinbelow in the figure description of an embodiment.

In the drawing:

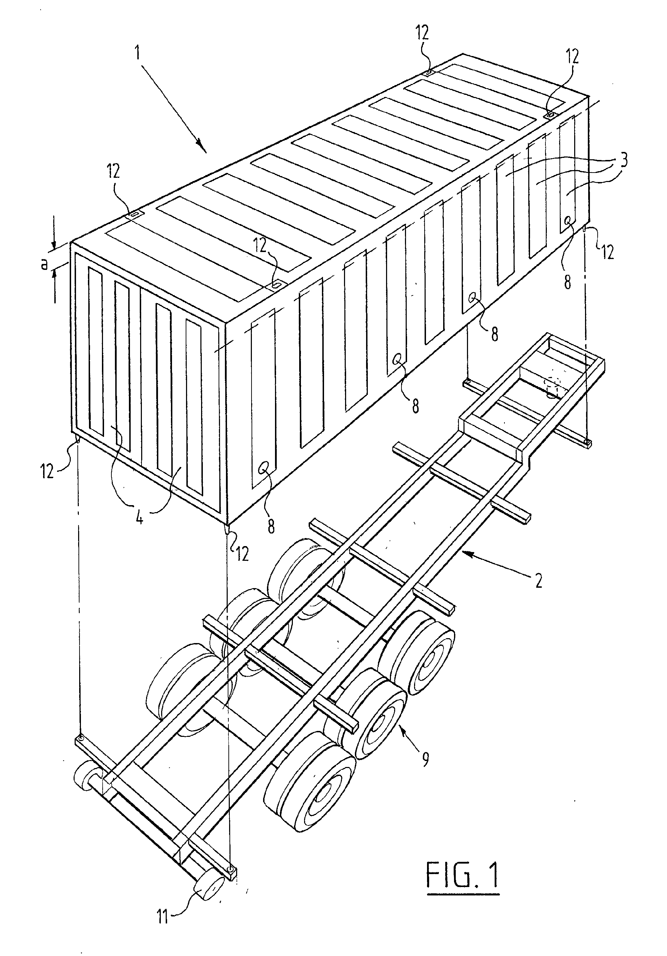

Figure 1 is a perspective rear view of the chassis with the loading space, shown before the loading space is placed on the chassis;
Figure 2 shows a rear view of the inside of the loading space of figure 1;
Figure 3 shows a detail of the matrix plates arranged in the loading space of figure 2.

In the figures the loading space is designated with the numeral 1 and the associated chassis with the numeral 2.

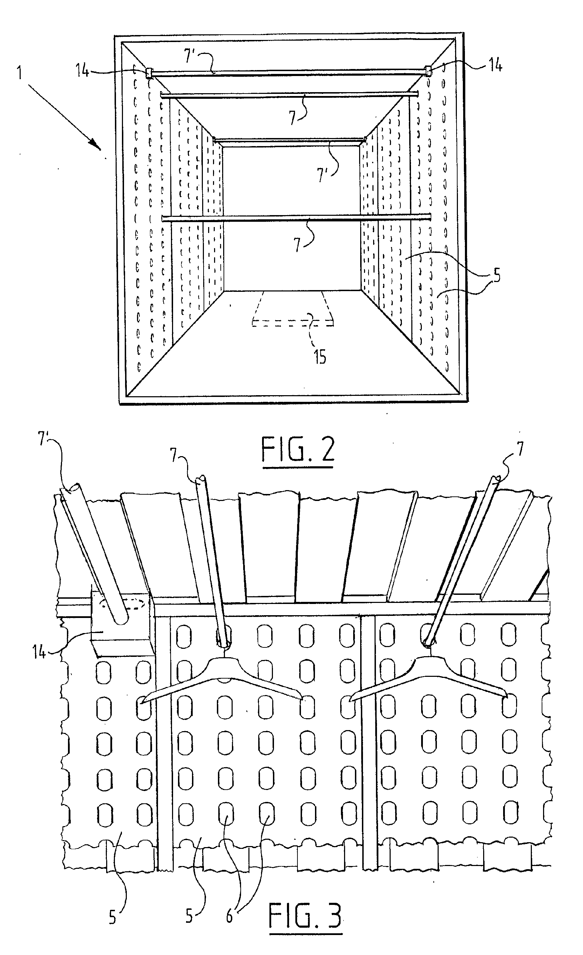

The loading space has an elongate rectangular form and consists of bottom walls, side walls and top wall, all in steel plate of a corrugated nature, said corrugations being designated with 3. The dimensioning of the loading space depends, as desired, on the cargo for transporting. A length of 45 feet is chosen for the transport of hanging clothing, whereby an internal dimension of 13573 mm can be obtained. The loading space is even higher, by a height of a, for instance 10 cm, than the so-called 'megatrailer', which achieves said internal height of 2818 mm. At the rear of loading space 1, i.e. on the rear side of chassis 2, are arranged access doors 4. These access doors are closed against each other and can be firmly anchored by locking means (not shown), which locking means are also provided with safety locks. Placed as according to figures 2 and 3 against the inner longitudinal walls of the loading space are matrix plates 5, each of which is provided with a fixed pattern of holes 6, these holes serving for suspending of cross-bars 7 which make it possible to arrange clothes hangers for hanging transport of textile goods.

According to the invention it is possible, as a result of the flat loading floor of the loading space, to arrange three bars directly above one another and 27 over the full length of the loading space, which results in an optimal volume of transported goods.

The loading space is provided at least at the ends remote from doors 4, in the side walls thereof, with CO₂-measuring points 8, whereby it is possible to determine whether CO₂ is prevalent in the front part or other parts of loading space 1. Should stowaways be present in the loading space, they can be easily detected in the loading space.

The chassis can be a normal ladder chassis and is provided on the rear side with three sets of wheels, each having double tyres. Due to the cargo being relatively light in weight, the unit can still be driven even with one or two punctured tyres, which enhances the reliability of the transport.

The kingpin 10, to which a tractor of random nature can be coupled, is arranged on the elevated front side remote from the sets of wheels 9. This elevation falls into a recess 15 in the underside of the loading space while still retaining a flat loading floor. By means of a correct choice of wheel size the chassis is given a height such that the most common tractor docking height of 105 cm is obtained. It remains possible with this size to also use tractors with a height varying between 95 and 115 cm. This improves the logistics of transport.

At the rear of the chassis, behind the sets of wheels 9, is arranged a ferry-roll 11 which lies low above the ground such that during driving onto ferries and the like with relatively steep entrance and exit ramps damage to loading unit 1 is reduced or prevented.

Owing to the separation between loading space 1 and chassis 2, any damage to each component can be repaired separately, wherein the component not requiring repair can be employed with another combination. This results in a great improvement of transport logistics.

It is finally noted that it is possible to embody loading space 1 with coupling points 12 which are situated at the standard dimensions as are usual in transport containers, so that loading space 1 can be handled with auxiliary means for standard containers. In the case of a loading unit with a length of 45 feet, these points 12 do not lie at the corners but further inward.

The corner castings 14 for accommodating the twistlock-pins are located relative to the rear or front wall of the loading unit such that for clothing transport with a pitch distance of 50 cm for bars 7, a fixed bar 7' can be mounted between those castings.

The invention is not limited to the above described embodiment.

## Claims

1. Assembly for transporting and storing bulk goods, such as clothing, comprising an elongate loading space supported by a chassis, which chassis has at least one set of wheels and a coupling point arranged at a distance therefrom for a tractor, **characterized in that** the loading space is formed as a self-supporting elongate unit according to a predetermined dimensioning, with lockable access doors arranged in the side wall, which unit is placeable and fixable on the height-adjusted chassis.

2. Assembly as claimed in claim 1, **characterized in that** the loading unit is provided at one or more positions with a CO₂-measuring point.

3. Assembly as claimed in claim 1 or 2, **characterized in that** the inner floor of the loading unit is flat over the full length and width thereof.

4. Assembly as claimed in any of the foregoing claims, **characterized in that** the top, bottom and side walls and the doors are constructed from corrugated steel plate elements.

5. Assembly as claimed in any of the claims 1-4, **characterized in that** the unit is provided with a standard pattern of twistlocks for transport as a container.

6. Assembly as claimed in any of the claims 1-5, **characterized in that** the loading unit is provided on the standing inner longitudinal sides with matrix panels to enable suspension of cross-bars serving for hanging clothing transport.

7. Assembly as claimed in any of the foregoing claims, **characterized in that** the chassis is provided on the rear with a ferry-roll.
